# EUROPEAN PATENT SPECIFICATION

(11) **EP 4 226 602 B1**
(45) Date of publication and mention of the grant of the patent: **05.11.2025**
(21) Application number: 22879058.0
(22) Date of filing: 12.04.2022
(51) Int. Cl.: H04L 65/75

(54) **METHOD AND APPARATUS FOR PARALLEL TRANSCODING OF MEDIA CONTENT ON CLOUD**
VERFAHREN UND VORRICHTUNG ZUR PARALLELEN TRANSCODIERUNG VON MEDIENINHALTEN IN EINER CLOUD
PROCÉDÉ ET APPAREIL DE TRANSCODAGE PARALLÈLE D'UN CONTENU MULTIMÉDIA SUR UN NUAGE

(30) Priority: 06.10.2021 US 202163253053 P; 24.03.2022 US 202217703189
(43) Date of publication of application: 16.08.2023
(73) Proprietor: Tencent America LLC, Palo Alto, CA 94306 (US)
(72) Inventor: SODAGAR, Iraj, Palo Alto, California 94306 (US)
(74) Representative: Novagraaf International SA
(86) International application number: PCT/US2022/024352
(87) International publication number: WO 2023/059370

(56) References cited:
- US-A1- 2016 134 881
- US-A1- 2018 332 324
- US-A1- 2021 096 924
- US-A1- 2021 096 924
- YOU YU ET AL: "OMAF4Cloud: Standards-Enabled 360� Video Creation as a Service", vol. 129, no. 9, 23 September 2020 (2020-09-23), US, pages 18 - 23, XP055972021, ISSN: 1545-0279, Retrieved from the Internet <URL:https://ieeexplore.ieee.org/stamp/stamp.jsp?tp=&arnumber=9204893> DOI: 10.5594/JMI.2020.3010400
- "Text of ISO/IEC CD 23090-8 Network-based Media Processing", no. n18236, 18 January 2019 (2019-01-18), XP030212767, Retrieved from the Internet <URL:http://phenix.int-evry.fr/mpeg/doc_end_user/documents/125_Marrakech/wg11/w18236.zip w18236_Text of ISOIEC CD 23090-8 Network-based Media Processing_clean.docx> [retrieved on 20190118]
- "Information technology - Coded representation of immersive media - Part 8: Network based media processing", 18 December 2020 (2020-12-18), pages 1 - 124, XP082071871, Retrieved from the Internet <URL:https://api.iec.ch/harmonized/publications/download/1027298> [retrieved on 20201218]

## Description

### FIELD

Embodiments of the present disclosure are directed to systems and methods for parallel transcoding of media content, where the media content is split into parallel media sub-streams and each media sub-stream is transcoded using one transcoder and then the parallel media sub-streams are merged into a single transcoded stream.

### BACKGROUND

Network and cloud platform are used to run various applications. The Network-Based Media Processing (NBMP) standard includes a specification for defining, instantiating, and running workflows on cloud platforms. The standard also defines splitter and merger function templates that use metadata for signaling the boundaries of the segments. The document "YOU YU ET AL: 'OMAF4Cloud: Standards-Enabled 360° Video Creation as a Service', SMPTE MOTION IMAGING JOURNAL, vol. 129, no. 9, 23 September 2020 (2020-09-23), pages 18-23, XP055972021, US ISSN: 1545-0279, DOI: 10.5594/JMI.2020.3010400 Retrieved from the Internet: URL:https://ieeexplore.ieee.org/stamp/stamp.jsp?tp=&arnumber=9204893" describes a media processing system that provides an end-to-end interactive media service. Further, the document US 2021/096924 A1 describes data processing including parallel processing of tasks or workflows to increase data processing speed. Furthermore, the document US 2016/134881 A1 describes parallel encoding of media. Additionally, the document "'Text of ISO/IEC CD 23090-8 Network-based Media Processing', 125. MPEG MEETING; 20190114 - 20190118; MARRAKECH; (MOTION PICTURE EXPERT GROUP OR ISO/IEC JTC1/SC29/WG11), no. n18236 18 January 2019 (2019-01-18), XP030212767, Retrieved from the Internet: URL:http://phenix.int-evry.fr/mpeg/doc_end_user/documents/125_Marrakech/wg11/w18236.zip w18236_Text of ISOIEC CD 23090-8 Network-based Media Processing_clean.docx [retrieved on 2019-01-18]" describes network-based media processing that defines a framework enabling initialization and controlling of media processing in a network.

The invention is defined by the appended claims. According to embodiments, cloud services running multiple transcoders are provided, which allows for increased speed of transcoding. For example, the number of parallel sub-streams can be increased to increase the speed of transcoding.

According to a first aspect, a method according to independent claim 1, performed by at least one processor that implements a network-based media processing (NBMP) workflow manager is provided. The method includes creating a NBMP workflow that includes: a splitter task that splits a compressed video stream into compressed sub-streams; transcoder tasks that respectively transcode the compressed sub-streams to be transcoded sub-streams, and a merger task that mergers the transcoded sub-streams into a single transcoded sub-stream. The method further includes: controlling at least one media processing entity to perform the NBMP workflow; and controlling the at least one media processing entity that performs the NBMP workflow to report to another entity at least one from among a splitter state of the splitter task, a transcoder state of at least one of the transcoder tasks, and a merger state of the merger task.

According to one or more embodiments, the at least one media processing entity is controlled to report the splitter state of the splitter task.

According to one or more embodiments, the at least one media processing entity is controlled to report the transcoder state of the at least one of the transcoder tasks.

According to one or more embodiments, the at least one media processing entity is controlled to report the merger state of the merger task.

According to one or more embodiments, the at least one media processing entity is controlled to report the splitter state of the splitter task, the transcoder state of the at least one of the transcoder tasks, and the merger state of the merger task.

According to one or more embodiments, the controlling the at least one media processing entity to report includes controlling the at least one media processing entity to report the splitter state of the splitter task, the transcoder state of at least one of the transcoder tasks, and the merger state of the merger task to a reporting server.

According to one or more embodiments, the controlling the at least one media processing entity to report includes controlling, based on information in a workflow description document (WDD) that is received by the NBMP workflow manager, the at least one media processing entity to report the at least one from among the splitter state of the splitter task, the transcoder state of at least one of the transcoder tasks, and the merger state of the merger task.

According to one or more embodiments, the controlling the at least one media processing entity to report includes controlling, based on information in a workflow description document (WDD) that is received by the NBMP workflow manager, the at least one media processing entity reports the at least one from among the splitter state of the splitter task, the transcoder state of at least one of the transcoder tasks, and the merger state of the merger task.

According to one or more embodiments, the controlling the at least one media processing entity to report includes controlling the at least one media processing entity to report the at least one from among the splitter state of the splitter task, the transcoder state of at least one of the transcoder tasks, and the merger state of the merger task while a corresponding one from among the splitter task, the transcoder tasks, and the merger task is performed.

According to one or more embodiments, the reporting server is configured to cause the at least one from among the splitter state of the splitter task, the transcoder state of at least one of the transcoder tasks, and the merger state of the merger task to be visualized in a web dashboard.

In a second aspect, a system is provided according to independent claim 9. The system includes: at least one memory configured to store computer program code; and at least one processor configured to access the computer program code and operate as instructed by the computer program code. The computer program code includes creating code configured to cause a network-based media processing (NBMP) workflow manager, implemented by the at least one processor, to create a NBMP workflow that includes: a splitter task that splits a compressed video stream into compressed sub-streams; transcoder tasks that respectively transcode the compressed sub-streams to be transcoded sub-streams, and a merger task that mergers the transcoded sub-streams into a single transcoded sub-stream. The computer program code further includes first controlling code configured to cause the NBMP workflow manager to control at least one media processing entity to perform the NBMP workflow; and second controlling code configured to cause the NBMP workflow manager to control the at least one media processing entity that performs the NBMP workflow to report to another entity at least one from among a splitter state of the splitter task, a transcoder state of at least one of the transcoder tasks, and a merger state of the merger task.

According to one or more embodiments, the second controlling code is configured to cause the NBMP workflow manager to control the at least one media processing entity to report the splitter state of the splitter task.

According to one or more embodiments, the second controlling code is configured to cause the NBMP workflow manager to control the at least one media processing entity to report the transcoder state of the at least one of the transcoder tasks.

According to one or more embodiments, the second controlling code is configured to cause the NBMP workflow manager to control the at least one media processing entity to report the merger state of the merger task.

According to one or more embodiments, the second controlling code is configured to cause the NBMP workflow manager to control the at least one media processing entity to report the splitter state of the splitter task, the transcoder state of the at least one of the transcoder tasks, and the merger state of the merger task.

According to one or more embodiments, the second controlling code is configured to cause the NBMP workflow manager to control the at least one media processing entity to report the splitter state of the splitter task, the transcoder state of at least one of the transcoder tasks, and the merger state of the merger task to a reporting server.

According to one or more embodiments, the second controlling code is configured to cause the NBMP workflow manager to control, based on information in a workflow description document (WDD) that is received by the NBMP workflow manager, the at least one media processing entity to report the at least one from among the splitter state of the splitter task, the transcoder state of at least one of the transcoder tasks, and the merger state of the merger task.

According to one or more embodiments, the second controlling code is configured to cause the NBMP workflow manager to control, based on information in a workflow description document (WDD) that is received by the NBMP workflow manager, the at least one media processing entity to report the at least one from among the splitter state of the splitter task, the transcoder state of at least one of the transcoder tasks, and the merger state of the merger task.

According to one or more embodiments, the second controlling code is configured to cause the NBMP workflow manager to control the at least one media processing entity to report the at least one from among the splitter state of the splitter task, the transcoder state of at least one of the transcoder tasks, and the merger state of the merger task while a corresponding one from among the splitter task, the transcoder tasks, and the merger task is performed.

In a further aspect, a non-transitory computer-readable medium storing computer code is provided according to claim 10. The computer code is configured to, when executed by at least one processor, cause the at least one processor to implement a network-based media processing (NBMP) workflow manager that creates a NBMP workflow that includes: a splitter task that splits a compressed video stream into compressed sub-streams; transcoder tasks that respectively transcode the compressed sub-streams to be transcoded sub-streams, and a merger task that mergers the transcoded sub-streams into a single transcoded sub-stream. The computer code is further configured to cause the at least one processor to control at least one media processing entity to perform the NBMP workflow; and control the at least one media processing entity that performs the NBMP workflow to report to another entity at least one from among a splitter state of the splitter task, a transcoder state of at least one of the transcoder tasks, and a merger state of the merger task.

### BRIEF DESCRIPTION OF THE DRAWINGS

Further features, the nature, and various advantages of the disclosed subject matter will be more apparent from the following detailed description and the accompanying drawings in which:
FIG. 1 is a diagram of an environment in which methods, apparatuses, and systems described herein may be implemented, according to embodiments.
FIG. 2 is a block diagram of example components of one or more devices of FIG. 1.
FIG. 3 is a block diagram of an NBMP system, according to embodiments.
FIG. 4 is a diagram of an example architecture for parallel transcoding using splitter and merger functions, according to embodiments.
FIG. 5 is a diagram of an example splitter function according to embodiments.
FIG. 6 is a diagram of an example merger function according to embodiments.
FIG. 7 is a block diagram of a system according to embodiments.
FIG. 8 is a block diagram of computer code according to embodiments.

### DETAILED DESCRIPTION

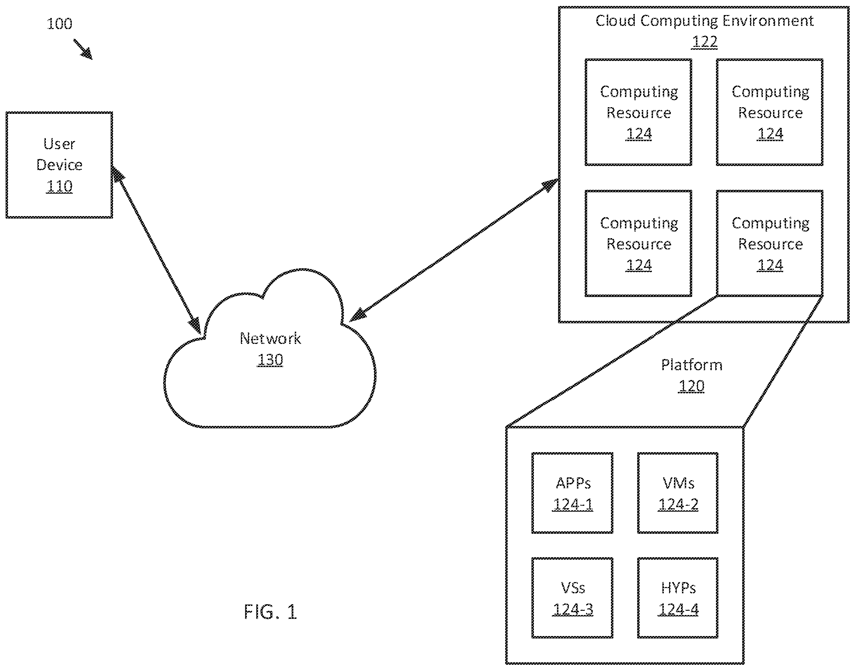

FIG. 1 is a diagram of an environment 100 in which methods, apparatuses, and systems described herein may be implemented, according to embodiments. As shown in FIG. 1, the environment 100 may include a user device 110, a platform 120, and a network 130. Devices of the environment 100 may interconnect via wired connections, wireless connections, or a combination of wired and wireless connections.

The user device 110 includes one or more devices capable of receiving, generating, storing, processing, and/or providing information associated with platform 120. For example, the user device 110 may include a computing device *(e.g.,* a desktop computer, a laptop computer, a tablet computer, a handheld computer, a smart speaker, a server, etc.), a mobile phone *(e.g.,* a smart phone, a radiotelephone, etc.), a wearable device *(e.g.,* a pair of smart glasses or a smart watch), or a similar device. In some implementations, the user device 110 may receive information from and/or transmit information to the platform 120.

The platform 120 includes one or more devices as described elsewhere herein. In some implementations, the platform 120 may include a cloud server or a group of cloud servers. In some implementations, the platform 120 may be designed to be modular such that software components may be swapped in or out depending on a particular need. As such, the platform 120 may be easily and/or quickly reconfigured for different uses.

In some implementations, as shown, the platform 120 may be hosted in a cloud computing environment 122. Notably, while implementations described herein describe the platform 120 as being hosted in the cloud computing environment 122, in some implementations, the platform 120 may not be cloud-based *(i.e.,* may be implemented outside of a cloud computing environment) or may be partially cloud-based.

The cloud computing environment 122 includes an environment that hosts the platform 120. The cloud computing environment 122 may provide computation, software, data access, storage, etc. services that do not require end-user (e.g., the user device 110) knowledge of a physical location and configuration of system(s) and/or device(s) that hosts the platform 120. As shown, the cloud computing environment 122 may include a group of computing resources 124 (referred to collectively as "computing resources 124" and individually as "computing resource 124").

The computing resource 124 includes one or more personal computers, workstation computers, server devices, or other types of computation and/or communication devices. In some implementations, the computing resource 124 may host the platform 120. The cloud resources may include compute instances executing in the computing resource 124, storage devices provided in the computing resource 124, data transfer devices provided by the computing resource 124, etc. In some implementations, the computing resource 124 may communicate with other computing resources 124 via wired connections, wireless connections, or a combination of wired and wireless connections.

As further shown in FIG. 1, the computing resource 124 includes a group of cloud resources, such as one or more applications ("APPs") 124-1, one or more virtual machines ("VMs") 124-2, virtualized storage ("VSs") 124-3, one or more hypervisors ("HYPs") 124-4, or the like.

The application 124-1 includes one or more software applications that may be provided to or accessed by the user device 110 and/or the platform 120. The application 124-1 may eliminate a need to install and execute the software applications on the user device 110. For example, the application 124-1 may include software associated with the platform 120 and/or any other software capable of being provided via the cloud computing environment 122. In some implementations, one application 124-1 may send/receive information to/from one or more other applications 124-1, via the virtual machine 124-2.

The virtual machine 124-2 includes a software implementation of a machine (e.g., a computer) that executes programs like a physical machine. The virtual machine 124-2 may be either a system virtual machine or a process virtual machine, depending upon use and degree of correspondence to any real machine by the virtual machine 124-2. A system virtual machine may provide a complete system platform that supports execution of a complete operating system ("OS"). A process virtual machine may execute a single program, and may support a single process. In some implementations, the virtual machine 124-2 may execute on behalf of a user (e.g., the user device 110), and may manage infrastructure of the cloud computing environment 122, such as data management, synchronization, or long-duration data transfers.

The virtualized storage 124-3 includes one or more storage systems and/or one or more devices that use virtualization techniques within the storage systems or devices of the computing resource 124. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

The hypervisor 124-4 may provide hardware virtualization techniques that allow multiple operating systems (e.g., "guest operating systems") to execute concurrently on a host computer, such as the computing resource 124. The hypervisor 124-4 may present a virtual operating platform to the guest operating systems, and may manage the execution of the guest operating systems. Multiple instances of a variety of operating systems may share virtualized hardware resources.

The network 130 includes one or more wired and/or wireless networks. For example, the network 130 may include a cellular network (e.g., a fifth generation (5G) network, a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, or the like, and/or a combination of these or other types of networks.

The number and arrangement of devices and networks shown in FIG. 1 are provided as an example. In practice, there may be additional devices and/or networks, fewer devices and/or networks, different devices and/or networks, or differently arranged devices and/or networks than those shown in FIG. 1. Furthermore, two or more devices shown in FIG. 1 may be implemented within a single device, or a single device shown in FIG. 1 may be implemented as multiple, distributed devices. Additionally, or alternatively, a set of devices (e.g., one or more devices) of the environment 100 may perform one or more functions described as being performed by another set of devices of the environment 100.

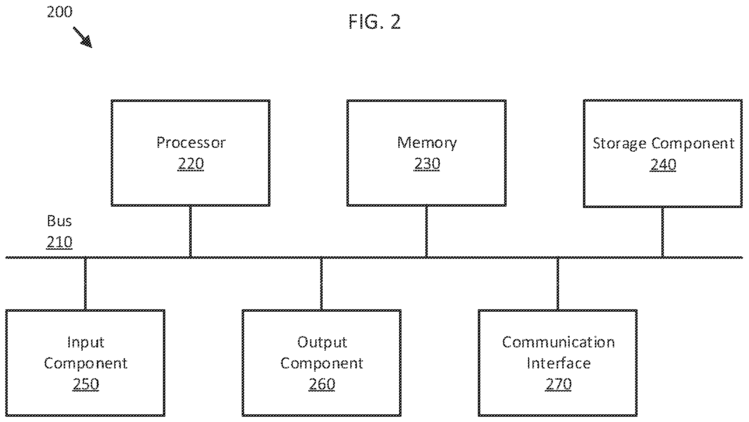

FIG. 2 is a block diagram of example components of one or more devices of FIG. 1. The device 200 may correspond to the user device 110 and/or the platform 120. As shown in FIG. 2, the device 200 may include a bus 210, a processor 220, a memory 230, a storage component 240, an input component 250, an output component 260, and a communication interface 270.

The bus 210 includes a component that permits communication among the components of the device 200. The processor 220 is implemented in hardware, firmware, or a combination of hardware and software. The processor 220 is a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some implementations, the processor 220 includes one or more processors capable of being programmed to perform a function. The memory 230 includes a random access memory (RAM), a read only memory (ROM), and/or another type of dynamic or static storage device *(e.g.,* a flash memory, a magnetic memory, and/or an optical memory) that stores information and/or instructions for use by the processor 220.

The storage component 240 stores information and/or software related to the operation and use of the device 200. For example, the storage component 240 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

The input component 250 includes a component that permits the device 200 to receive information, such as via user input (e.g., a touch screen display, a keyboard, a keypad, a mouse, a button, a switch, and/or a microphone). Additionally, or alternatively, the input component 250 may include a sensor for sensing information (e.g., a global positioning system (GPS) component, an accelerometer, a gyroscope, and/or an actuator). The output component 260 includes a component that provides output information from the device 200 (e.g., a display, a speaker, and/or one or more light-emitting diodes (LEDs)).

The communication interface 270 includes a transceiver-like component (e.g., a transceiver and/or a separate receiver and transmitter) that enables the device 200 to communicate with other devices, such as via a wired connection, a wireless connection, or a combination of wired and wireless connections. The communication interface 270 may permit the device 200 to receive information from another device and/or provide information to another device. For example, the communication interface 270 may include an Ethernet interface, an optical interface, a coaxial interface, an infrared interface, a radio frequency (RF) interface, a universal serial bus (USB) interface, a Wi-Fi interface, a cellular network interface, or the like.

The device 200 may perform one or more processes described herein. The device 200 may perform these processes in response to the processor 220 executing software instructions stored by a non-transitory computer-readable medium, such as the memory 230 and/or the storage component 240. A computer-readable medium is defined herein as a non-transitory memory device. A memory device includes memory space within a single physical storage device or memory space spread across multiple physical storage devices.

Software instructions may be read into the memory 230 and/or the storage component 240 from another computer-readable medium or from another device via the communication interface 270. When executed, software instructions stored in the memory 230 and/or the storage component 240 may cause the processor 220 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in FIG. 2 are provided as an example. In practice, the device 200 may include additional components, fewer components, different components, or differently arranged components than those shown in FIG. 2. Additionally, or alternatively, a set of components (e.g., one or more components) of the device 200 may perform one or more functions described as being performed by another set of components of the device 200.

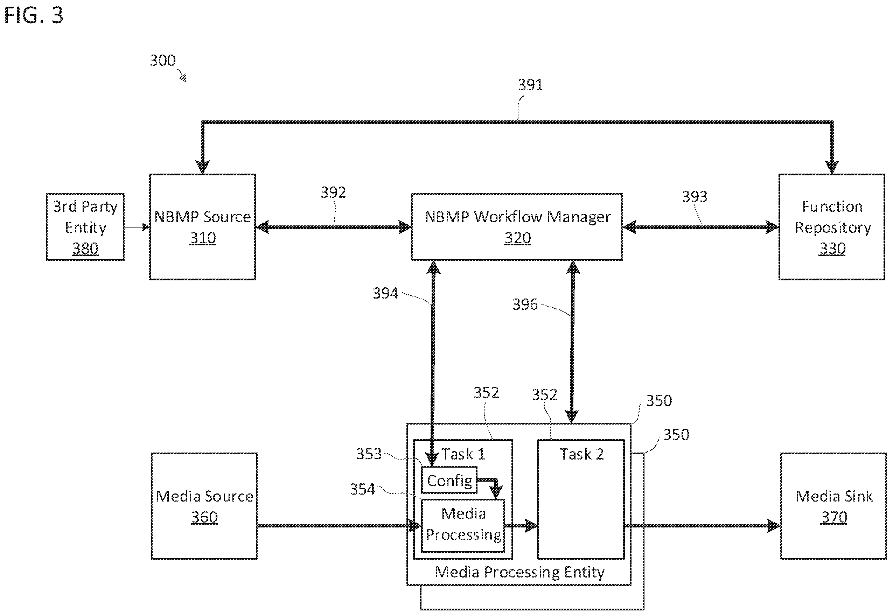

In an embodiment of the present disclosure, an NBMP system 300 is provided. With reference to FIG. 3, the NBMP system 300 comprises an NBMP source 310, an NBMP workflow manager 320, a function repository 330, one or more media processing entities 350, a media source 360, and a media sink 370.

The NBMP source 310 may receive instructions from a third party entity 380, may communicate with the NBMP workflow manager 320 via an NBMP workflow API 392, and may communicate with the function repository 330 via a function discovery API 391. For example, the NBMP source 310 may send a workflow description document(s) (WDD) to the NBMP workflow manager 320, and may read the function description of functions stored in the function repository 330, the functions being media processing functions stored in memory of the function repository 330 such as, for example, functions of media decoding, feature point extraction, camera parameter extraction, projection method, seam information extraction, blending, post-processing, and encoding. The NBMP source 310 may comprise or be implemented by at least one processor and memory that stores code configured to cause the at least processor to perform the functions of the NBMP source 310.

The NBMP source 310 may request the NBMP workflow manager 320 to create workflow including tasks 352 to be performed by the one or more media processing entities 350 by sending the workflow description document, which may include several descriptors, each of which may have several parameters.

For example, the NBMP source 310 may select functions stored in the function repository 330 and send the workflow description document to the NBMP workflow manager 320 that includes a variety of descriptors for description details such as input and output data, required functions, and requirements for the workflow. The workflow description document may include a set of task descriptions and a connection map of inputs and outputs of tasks 352 to be performed by one or more of the media processing entities 350. When the NBMP workflow manager 320 receives such information from the NBMP source 310, the NBMP workflow manager 320 may create the workflow by instantiating the tasks based on function names and connecting the tasks in accordance with the connection map.

Alternatively or additionally, the NBMP source 310 may request the NBMP workflow manager 320 to create workflow by using a set of keywords. For example, NBMP source 310 may send the NBMP workflow manager 320 the workflow description document that may include a set of keywords that the NBMP workflow manager 320 may use to find appropriate functions stored in the function repository 330. When the NBMP workflow manager 320 receives such information from the NBMP source 310, the NBMP workflow manager 320 may create the workflow by searching for appropriate functions using the keywords that may be specified in a Processing Descriptor of the workflow description document, and use the other descriptors in the workflow description document to provision tasks and connect them to create the workflow.

The NBMP workflow manager 320 may communicate with the function repository 330 via a function discovery API 393, which may be a same or different API from the function discovery API 391, and may communicate with one or more of the media processing entities 350 via an NBMP task API 394. The NBMP workflow manager 320 may also communicate with one or more of the media processing entities 350 via a media processing entity (MPE) API 396. The NBMP workflow manager 320 may comprise or be implemented by at least one processor and memory that stores code configured to cause the at least processor to perform the functions of the NBMP workflow manager 320.

The NBMP workflow manager 320 may use the NBMP task API 394 to setup, configure, manage, and monitor one or more tasks 352 of a workflow that is performable by the one or more media processing entities 350. In an embodiment, the NBMP workflow manager 320 may use the NBMP task API 394 to update and destroy the tasks 352. In order to configure, manage, and monitor tasks 352 of the workflow, the NBMP workflow manager 320 may send messages, such as requests, to one or more of the media processing entities 350, wherein each message may have several descriptors, each of which have several parameters. The tasks 352 may each include media processing functions 354 and configurations 353 for the media processing functions 354.

In an embodiment, after receiving a workflow description document from the NBMP source 310 that does not include a list of the tasks (e.g., includes a list of keywords instead of a list of tasks), the NBMP workflow manager 320 may select the tasks based on the descriptions of the tasks in the workflow description document to search the function repository 330, via the function discovery API 393, to find the appropriate functions to run as tasks 352 for a current workflow. For example, the NBMP workflow manager 320 may select the tasks based on keywords provided in the workflow description document. After the appropriate functions are identified by using the keywords or the set of task descriptions that is provided by the NBMP source 310, the NBMP workflow manager 320 may configure the selected tasks in the workflow by using the NBMP task API 394. For example, the NBMP workflow manager 320 may extract configuration data from information received from the NBMP source, and configure the tasks 352 based on the configuration data.

The one or more media processing entities 350 may be configured to receive media content from the media source 360, process the media content in accordance with the workflow, that includes tasks 352, created by the NBMP workflow manager 320, and output the processed media content to the media sink 370. The one or more media processing entities 350 may each comprise or be implemented by at least one processor and memory that stores code configured to cause the at least processor to perform the functions of the media processing entities 350.

The media source 360 may include memory that stores media and may be integrated with or separate from the NBMP source 310. In an embodiment, the NBMP workflow manager 320 may notify the NBMP source 310 when a workflow is prepared and the media source 360 may transmit media content to the one or more of the media processing entities 350 based on the notification that the workflow is prepared.

The media sink 370 may comprise or be implemented by at least one processor and at least one display that is configured to display the media that is processed by the one or more media processing entities 350.

The third party entity 380 may comprise or be implemented by at least one processor and memory that stores code configured to cause the at least processor to perform the functions of the third party entity 380.

As discussed above, messages from the NBMP Source 310 (e.g., a workflow description document for requesting creation of a workflow) to the NBMP workflow manager 320, and messages (e.g., for causing the workflow to be performed) from the NBMP workflow manager 320 to the one or more media processing entities 350 may include several descriptors, each of which may have several parameters. In cases, communication between any of the components of the NBMP system 300 using an API may include several descriptors, each of which may have several parameters.

According to embodiments, cloud services running multiple transcoders are provided, which allows for increased speed of transcoding. For example, the number of parallel sub-streams can be increased to increase the speed of transcoding.

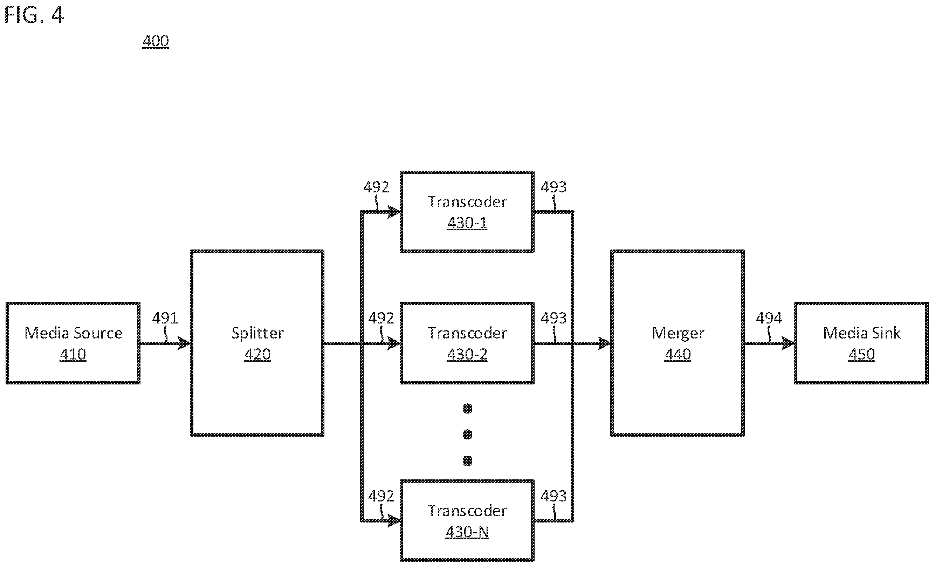

According to embodiments, the architecture 400 shown in FIG. 4 may be implemented, which is an architecture for parallel transcoding using splitter and merger functions.

With reference to FIG. 4, a single stream 491 from a media source 410 is divided into multiple sub-streams 492 by a splitter 420. Then, each sub-stream 492 is transcoded by a respective transcoder (e.g. transcoders 430-1, 430-2, ... 430-N), and the transcoded sub-streams 493 from the transcoders are sent to a merger 440. The merger 440 combines the transcoded sub-streams 493 and generates and sends an output 494 to a media sink 450. The output 494 may include a single transcoded stream that includes the transcoded sub-streams 493. According to embodiments, the media source 410 may correspond to the media source 360 in FIG. 3, and the media sink 450 may correspond to the media sink 370 in FIG. 3. According to embodiments, the splitter 420, the transcoders (e.g. transcoders 430-1, 430-2, ... 430-N), and the merger 440 may be functions (e.g. media processing functions 354 in FIG. 3) performed by one or more of the media processing entities 350 of FIG. 3 as a part of one or more of the tasks 352.

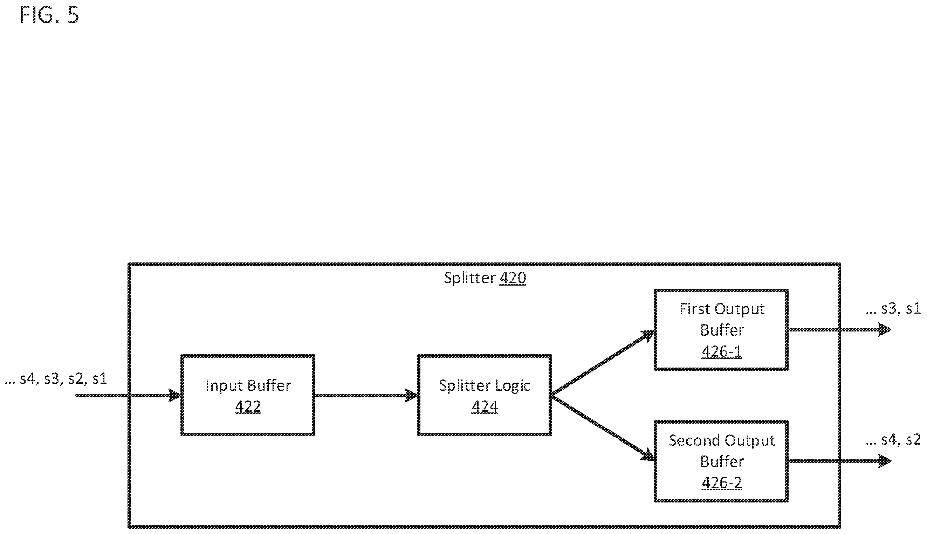

With reference to FIGs. 5-6, example embodiments of the splitter 420 and the merger 440 are described. For example, as shown in FIGs. 5-6, respectively, the splitter 420 may be a splitter function having a 1:2 split, and the merger 440 may be a merger function having a 2:1 merge. However, the split and merge ratios of the splitter 420 and the merger 440 are not limited thereto. According to embodiments, the media processing entities 350, that perform the splitter and merger functions, may accept a number of split and/or merge as a configuration parameter as defined in a standard. For example, at least one indicator may be included within the corresponding configuration 353 of a task 352, and may indicate a number of split and/or merge to be performed by the splitter function and/or merger function included in the task 352.

With reference to FIGs. 5-6, both the splitter function and the merger function use input and output buffers that are configurable as part of a function template. The input and output of the splitter function and the merger functions may be indexed streams that are provided with timing metadata. Each segment of the indexed streams may have metadata of a start time, a duration, and a byte length in associated timing metadata streams. The corresponding configuration parameters may be segment-duration, segment-metadata, and repeat-header.

According to embodiments, with reference to FIG. 5, the splitter 420 may include an input buffer 422, splitter logic 424, and a plurality of output buffers (e.g. a first output buffer 426-1, and a second output buffer 426-2). The input buffer 422 may be configured to receive a compressed video stream that is indexed and provided with the timing metadata. As an example, the compressed video stream may include compressed segments s4, s3, s2, and s1. The splitter logic 424 may be configured to split the compressed video stream into compressed sub-streams, and provide compressed sub-streams to the output buffers, respectively. For example, the splitter logic 424 may provide a compressed sub-stream that includes the compressed segments s3 and s1 to the first output buffer 426-1, and a compressed sub-stream that includes the compressed segments s4 and s2 to the second output buffer 426-2. The output buffers may be configured to output the compressed sub-streams that are received by the output buffers. According to embodiments, the splitter 420 may output the compressed sub-stream that includes the compressed segments s3 and s1 to a first transcoder (e.g. transcoder 430-1 of FIG. 4), and the compressed sub-stream that includes the compressed segments s4 and s2 to a second transcoder (e.g. transcoder 430-2 of FIG. 4), the first and second transcoders may transcode the received compressed sub-streams and output the transcoded sub-streams to the merger 440.

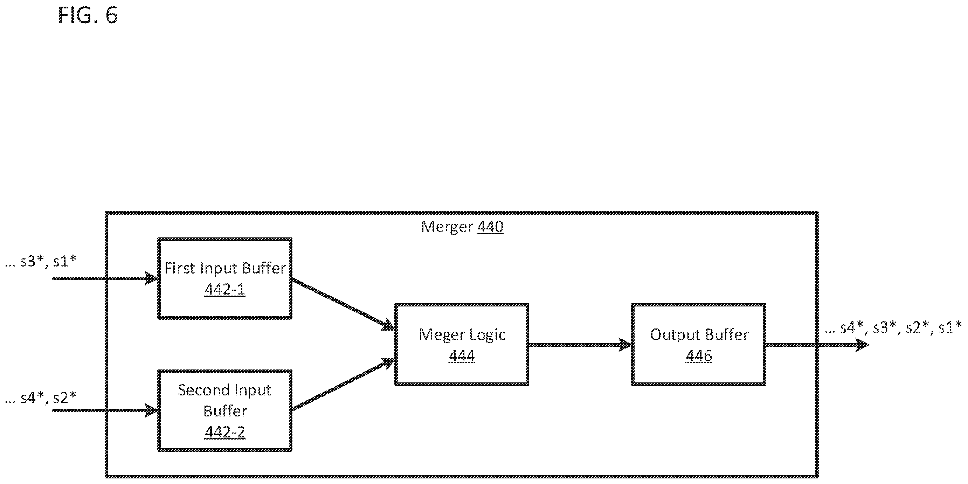

With reference to FIG. 6, the merger 440 may include a plurality of input buffers (e.g. a first input buffer 442-1, and a second input buffer 442-2), merger logic 444, and an output buffer 446. The input buffers may be configured to receive the transcoded sub-streams, respectively. For example, the first input buffer 442-1 may receive the transcoded sub-stream that includes transcoded segments s3* and s1*, and the second input buffer 442-2 may receive the transcoded sub-stream that includes the transcoded segments s4* and s2*, and each of the first input buffer 442-1 and the second input buffer 442-2 may be configured to output the respectively received transcoded sub-stream to the merger logic 444. The merger logic 444 may be configured to merge the transcoded sub-streams into a single transcoded video stream that includes the transcoded segments (e.g. transcoded segments s4*, s3*, s2*, and s1*), and send the single transcoded video stream to the output buffer 446. The output buffer 446 may be configured to output the single transcoded video stream. According to embodiments, the merger 440 may output the single transcoded video stream to the media sink 450. The single transcoded video stream may be indexed and provided with the timing metadata.

According to embodiments, the splitter 420, the transcoders, and the merger 440 may report their operation to a reporting server. For example, the media processing entity (or entities) that implements the splitter 420, the transcoders, and/or the merger 440 may send information to another component (e.g. a reporting server), the information indicating the splitter state(s), transcoder state(s), and/or merger state(s) of the function(s) performed by the media processing entity.

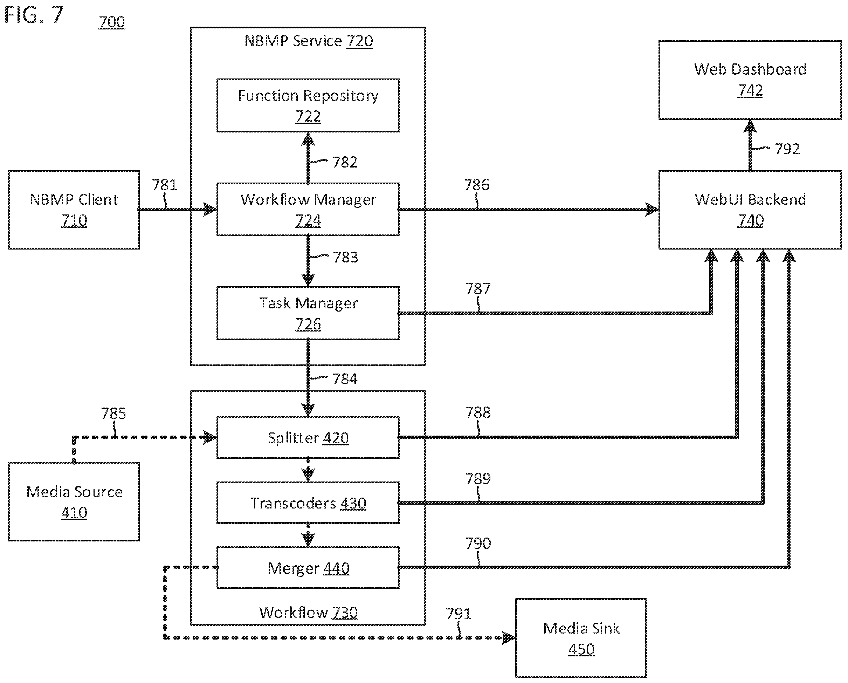

With reference to FIG. 7, example operations performed by embodiments of the present disclosure are described below. In Fig. 7, solid lines with arrows indicate NBMP API operations, and dashed lines with arrows indicate media processing. FIG. 7 illustrates a system 700 that includes NBMP management components. According to embodiments, the system 700 may include an NBMP client 710, an NBMP service 720, the media source 410, the media sink 450, and a reporting server that implements a webUI backend 740 and a web dashboard 742. According to embodiments, the reporting server may be implemented by at least one processor and memory that stores computer code configured to cause the at least processor to perform the functions of the reporting server. According to embodiments, the at least one processor and/or memory may be the same as or different from the at least one processor and/or memory that causes other components of embodiments of the present disclosure to be implemented.

According to embodiments, the NBMP client 710 may be implemented by the NBMP source 310 of FIG. 3. The NBMP service 720 may include a function repository 722, a workflow manager 724, and a task manager 726. According to embodiments, the function repository 722 may be implemented by the function repository 330 of FIG. 3, and the workflow manager 724 and the task manager 726 may be implemented by the NBMP workflow manager 320 of FIG. 3. According to embodiments, the workflow 730 may include the splitter 420, the transcoders 430, and the merger 440, which may be included in tasks 352 that are implemented by one or more media processing entities 350 of FIG. 3.

According to embodiments, the system 700 may perform a method that includes (1) creating a workflow, (2) getting available functions, (3) creating splitter, transcoder, and merger tasks, (4) running the workflow, (5) streaming media to the workflow, and (6) visualizing the workflow and task states.

For example, the NBMP client 710 may create and send a WDD 781, that describes a workflow 730, to the workflow manager 724, and the workflow manager 724 may create the workflow 730. According to embodiments, the workflow 730 may be created as previously described with reference to FIG. 3. After receiving the WDD 781, the workflow manager 724 may get (782) function templates from the function repository 722 to create the workflow 730. According to embodiments, the workflow manager 724 (e.g. NBMP workflow manager 320) may interact with the function repository 722 (e.g. function repository 330) as previously described with reference to FIG. 3. Based on the WDD 781 and the function templates, the workflow manager 724 may create and order (783) tasks of the workflow 730 to be performed by one or more media processing entities (e.g. media processing entities 350). The tasks may include the media processing functions of the splitter 420, the transcoders 430, and the merger 440. After the workflow manager 724 creates and orders the tasks of the workflow 730, the task manager 726 may control (784) the one or more media processing entities to run the tasks of the workflow 730. The tasks may be run by the media source 410 streaming (785) media to the media processing entity implementing the splitter 420; the media being processed by the one or more media processing entities implementing the splitter 420, the transcoders 430, and the merger 440; and the media processing entity implementing the merger 440 outputting (791) the processed media content to the media sink 450. According to embodiments, the media streamed by the media source 410 may be an h265 stream that is indexed. The functions of the splitter 420, the transcoders 430, and the merger 440 may be understood from the descriptions above with reference to FIGs. 4-6.

According to embodiments, the workflow manager 724 may report (786) workflow states to the webUI backend 740 of the reporting server; the task manager 726 may report (787) task states to the webUI backend 740 of the reporting server; the splitter 420 may report (788) splitter states to the webUI backend 740 of the reporting server; the transcoders 430 may report (789) their respective transcoder states to the webUI backend 740 of the reporting server, and the merger 440 may report (790) merger states to the webUI backend 740 of the reporting server. The reporting of the states may include sending first information including indicators that indicate the respective states. According to embodiments, the WDD 781 may include second information indicating where one or more of the workflow manager 724, the task manager 726, the splitter 420, the transcoders 430, and the merger 440 should report their respective states, and the second information may further indicate what is to be reported. According to embodiments, the workflow manager 724 and/or task manager 726 may report their respective states based on the second information, and may control the one or more media processing entities to report the states of the splitter 420, the transcoders 430, and/or the merger 440, that are implemented by the one or more media processing entities, based on the second information.

According to embodiments, the reporting server may cause (792) visualization of data on the web dashboard 742 based on the first information received by the reporting server. For example, the data visualized may include the workflow states, the task states, a workflow graph, and a media sink video player. According to embodiments, the splitter states, the transcoders states, and the merger states may also be visualized. The reporting server may be configured to cause the data to be visualized by causing at least one display to display the web dashboard 742.

According to embodiments, systems and methods of parallel transcoding of a media streaming using two or more transcoders may be provided that increases the effective speed of transcoding. The systems and methods may implement NBMP splitter and merger functions of an NBMP standard, so as to be configurable with a number of split/merge and function using timing metadata. The systems and methods may manage instantiation, deployment, management, and monitoring of a workflow using the NBMP standard, wherein workflow tasks, as well as the NBMP workflow manager, report progress to a web-based dashboard in real-time.

According to embodiments of the present disclosure, at least one processor with memory storing computer code may be provided. The computer code may be configured to, when executed by the at least one processor, perform any number of aspects of the present disclosure.

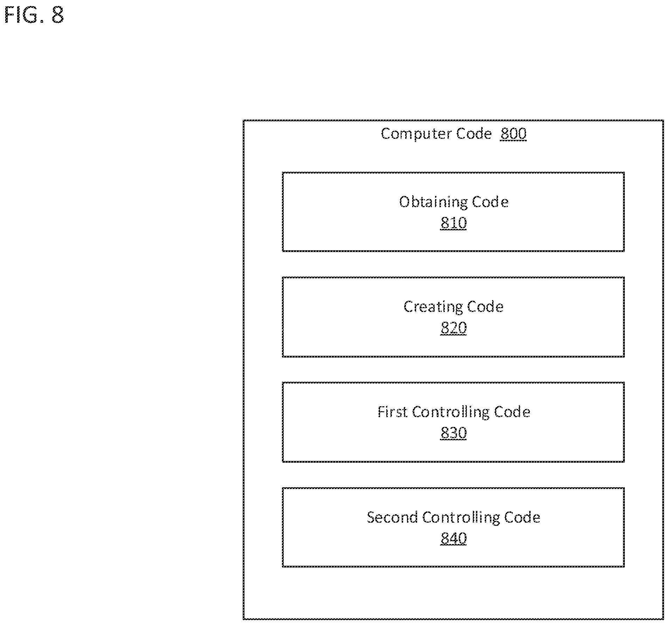

For example, with reference to FIG. 8, computer code 800 may be implemented in the NBMP system 300. For example, the computer code may be stored in memory of the NBMP workflow manager 320 and may be executed by at least one processor of the NBMP workflow manager 320. The compute code may comprise, for example, obtaining code 810, creating code 820, first controlling code 830, and second controlling code 840.

The obtaining code 810 may be configured to cause the NBMP workflow manager 320 to obtain information from a WDD, in accordance with embodiments of the present disclosure. For example, the NBMP workflow manager 320 may receive the WDD, and parameters therein may be signaled to the NBMP workflow manager 320 such that the NBMP workflow manager 320 obtains corresponding information.

The creating code 820 may be configured to cause the NBMP workflow manager 320 to create a media processing workflow that includes tasks 352, in accordance with embodiments of the present disclosure. For example, the tasks 352 may include the functions of the splitter 420, the transcoders 430, and the merger 440. According to embodiments, the media processing workflow may be created based on information obtained from the WDD.

The first controlling code 830 may be configured to cause the NBMP workflow manager 320 to control at least one media processing entity 350 to perform the media processing workflow, in accordance with embodiments of the present disclosure.

The second controlling code 840 may be configured to cause the NBMP workflow manager 320 to control the at least one media processing entity 350 that performs the media processing workflow to report at least one from among a splitter state, a transcoder state, and a merger state, in accordance with embodiments of the present disclosure. For example, a media processing entity 350 that implements the splitter 420 may be controlled to report a splitter state, a media processing entity 350 that implements the transcoder 430 may be controlled to report a transcoder state, and a media processing entity 350 that implements the merger 440 may be controlled to report a merger state. According to embodiments, the NBMP workflow manager 320 may perform the control based on the information obtained from the WDD. For example, the NBMP workflow manager 320 may control what information is to be reported and to where the information is to be reported based on the information obtained from the WDD. According to embodiments, the NBMP workflow manager 320 may control the media processing entities 350 to report the states to the reporting server.

According to one or more embodiments, embodiments of the present disclosure may be implemented in environments different from NBMP.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, or a combination of hardware and software.

Even though combinations of features are recited in the claims and/or described in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. A method performed by at least one processor (220) that implements a network-based media processing, NBMP, workflow manager (320), the method comprising:
creating a NBMP workflow (730) that includes:
a splitter task that splits a compressed video stream into compressed sub-streams;
transcoder tasks that respectively transcode the compressed sub-streams to be transcoded sub-streams; and
a merger task that merges the transcoded sub-streams into a single transcoded sub-stream;
controlling at least one media processing entity (350) to perform the NBMP workflow (730); and
controlling, based on information in a workflow description document, WDD, (781) received by the NBMP workflow manager (320), the at least one media processing entity (350) that performs the NBMP workflow (730) to report to another entity at least one from among a splitter state of the splitter task, a transcoder state of at least one of the transcoder tasks, and a merger state of the merger task.

2. The method of claim 1, wherein the at least one media processing entity (350) is controlled to report the splitter state of the splitter task.

3. The method of claim 1, wherein the at least one media processing entity (350) is controlled to report the transcoder state of the at least one of the transcoder tasks.

4. The method of claim 1, wherein the at least one media processing entity (350) is controlled to report the merger state of the merger task.

5. The method of claim 1, wherein the at least one media processing entity (350) is controlled to report the splitter state of the splitter task, the transcoder state of the at least one of the transcoder tasks, and the merger state of the merger task.

6. The method of claim 1, wherein the controlling the at least one media processing entity (350) to report comprises controlling the at least one media processing entity (350) to report the splitter state of the splitter task, the transcoder state of the at least one of the transcoder tasks, and the merger state of the merger task to a reporting server.

7. The method of any one of claims 1 to 6, wherein the controlling the at least one media processing entity (350) to report comprises controlling the at least one media processing entity (350) to report the at least one from among the splitter state of the splitter task, the transcoder state of the at least one of the transcoder tasks, and the merger state of the merger task while a corresponding one from among the splitter task, the transcoder tasks, and the merger task is performed.

8. The method of claim 6, wherein the reporting server is configured to cause the at least one from among the splitter state of the splitter task, the transcoder state of the at least one of the transcoder tasks, and the merger state of the merger task to be visualized in a web dashboard (742).

9. A system comprising:
at least one memory (230) configured to store computer program code (800); and
at least one processor (220) configured to access the computer program code (800) and operate as instructed by the computer program code (800), the computer program code (800) being configured to cause the at least one processor (220) to perform the method of any one of claims 1 to 8.

10. A computer-readable medium storing computer code (800) that is configured to, when executed by at least one processor (220), cause the at least one processor (220) to implement the method of any one of claims 1 to 8.

## Patentansprüche

1. Verfahren, das von mindestens einem Prozessor (220) durchgeführt wird, der einen netzwerkbasierten Medienverarbeitungs(NBMP)-Arbeitsablaufverwalter (320) implementiert, wobei das Verfahren Folgendes umfasst:
Erstellen eines NBMP-Arbeitsablaufs (730), der Folgendes beinhaltet:
eine Splitteraufgabe, die einen komprimierten Videostream in komprimierte Unterstreams teilt;
Transcoderaufgaben, die die komprimierten Unterstreams jeweils zu transcodierten Unterstreams transcodieren; und
eine Verschmelzungsaufgabe, die die transcodierten Unterstreams zu einem einzelnen transcodierten Unterstream verschmelzt;
Steuern von mindestens einer Medienverarbeitungsentität (350), um den NBMP-Arbeitsablauf (730) durchzuführen; und
Steuern der mindestens einen Medienverarbeitungsentität (350), die den NBMP-Arbeitsablauf (730) durchführt, auf Basis von Informationen in einem Arbeitsablaufbeschreibungsdokument, WDD, (781), das vom NBMP-Arbeitsablaufverwalter (320) empfangen wurde, um einer anderen Entität mindestens eines von einem Splitterzustand der Splitteraufgabe, einem Transcoderzustand von mindestens einer der Transcoderaufgaben und einem Verschmelzungszustand der Verschmelzungsaufgabe zu melden.

2. Verfahren nach Anspruch 1, wobei die mindestens eine Medienverarbeitungsentität (350) gesteuert wird, um den Splitterzustand der Splitteraufgabe zu melden.

3. Verfahren nach Anspruch 1, wobei die mindestens eine Medienverarbeitungsentität (350) gesteuert wird, um den Transcoderzustand von mindestens einer der Transcoderaufgaben zu melden.

4. Verfahren nach Anspruch 1, wobei die mindestens eine Medienverarbeitungsentität (350) gesteuert wird, um den Verschmelzungszustand der Verschmelzungsaufgabe zu melden.

5. Verfahren nach Anspruch 1, wobei die mindestens eine Medienverarbeitungsentität (350) gesteuert wird, um den Splitterzustand der Splitteraufgabe, den Transcoderzustand der mindestens einen der Transcoderaufgaben und den Verschmelzungszustand der Verschmelzungsaufgabe zu melden.

6. Verfahren nach Anspruch 1, wobei das Steuern der mindestens eine Medienverarbeitungsentität (350) zum Melden das Steuern der mindestens einen Medienverarbeitungsentität (350) umfasst, um den Splitterzustand der Splitteraufgabe, den Transcoderzustand der mindestens einen der Transcoderaufgaben und den Verschmelzungszustand der Verschmelzungsaufgabe einem Meldeserver zu melden.

7. Verfahren nach einem der Ansprüche 1 bis 6, wobei das Steuern der mindestens einen Medienverarbeitungsentität (350) zum Melden das Steuern der mindestens einen Medienverarbeitungsentität (350) umfasst, um mindestens eines des Splitterzustands der Splitteraufgabe, des Transcoderzustands der mindestens einen der Transcoderaufgaben und des Verschmelzungszustands der Verschmelzungsaufgabe zu melden, während eine entsprechende der Splitteraufgabe, der Transcoderaufgaben und der Verschmelzungsaufgabe durchgeführt wird.

8. Verfahren nach Anspruch 6, wobei der Meldeserver dazu ausgelegt ist, den mindestens einen des Splitterzustands der Splitteraufgabe, des Transcoderzustands der mindestens einen der Transcoderaufgaben und des Verschmelzungszustands der Verschmelzungsaufgabe in einem Webdashboard (742) zu visualisieren.

9. System, das Folgendes umfasst:
mindestens einen Speicher (230), der dazu ausgelegt ist, einen Computerprogrammcode (800) zu speichern; und
mindestens einen Prozessor (220), der dazu ausgelegt ist, auf den Computerprogrammcode (800) zuzugreifen und wie vom Computerprogrammcode (800) angewiesen betrieben zu werden, wobei der Computerprogrammcode (800) dazu ausgelegt ist, den mindestens einen Prozessor (220) zu veranlassen, das Verfahren nach einem der Ansprüche 1 bis 8 durchzuführen.

10. Computerlesbares Medium, auf dem Computercode (800) gespeichert ist, der dazu ausgelegt ist, wenn er von mindestens einem Prozessor (220) ausgeführt wird, den mindestens einen Prozessor (220) zu veranlassen, das Verfahren nach einem der Ansprüche 1 bis 8 zu implementieren.

## Revendications

1. Procédé réalisé par au moins un processeur (220) qui met en œuvre un gestionnaire de flux de travail de traitement multimédia en réseau, NBMP, (320), le procédé comprenant les étapes suivantes :
créer un flux de travail NBMP (730) qui comporte :
une tâche de diviseur qui divise un flux vidéo compressé en sous-flux compressés ;
des tâches de transcodeur qui transcodent respectivement les sous-flux compressés pour avoir des sous-flux transcodés ; et
une tâche de combineur pour fusionner les sous-flux transcodés en un seul sous-flux transcodé ;
contrôler au moins une entité de traitement multimédia (350) pour réaliser le flux de travail NBMP (730) ; et
sur la base d'informations dans un document de description de flux de travail, WDD, (781) reçu par le gestionnaire de flux de travail NBMP (320), contrôler l'au moins une entité de traitement multimédia (350) qui réalise le flux de travail NBMP (730) pour rapporter à une autre entité au moins un parmi un état de diviseur de la tâche de diviseur, un état de transcodeur d'au moins une des tâches de transcodeur, et un état de combineur de la tâche de combineur.

2. Procédé selon la revendication 1, dans lequel l'au moins une entité de traitement multimédia (350) est contrôlée pour rapporter l'état de diviseur de la tâche de diviseur.

3. Procédé selon la revendication 1, dans lequel l'au moins une entité de traitement multimédia (350) est contrôlée pour rapporter l'état de transcodeur de l'au moins une des tâches de transcodeur.

4. Procédé selon la revendication 1, dans lequel l'au moins une entité de traitement multimédia (350) est contrôlée pour rapporter l'état de combineur de la tâche de combineur.

5. Procédé selon la revendication 1, dans lequel l'au moins une entité de traitement multimédia (350) est contrôlée pour rapporter l'état de diviseur de la tâche de diviseur, l'état de transcodeur de l'au moins une des tâches de transcodeur et l'état de combineur de la tâche de combineur.

6. Procédé selon la revendication 1, dans lequel le contrôle de l'au moins une entité de traitement multimédia (350) pour effecteur un rapport comprend le contrôle de l'au moins une entité de traitement multimédia (350) pour rapporter l'état de diviseur de la tâche de diviseur, l'état de transcodeur de l'au moins une des tâches de transcodeur et l'état de combineur de la tâche de combineur à un serveur de rapport.

7. Procédé selon l'une des revendications 1 à 6, dans lequel le contrôle de l'au moins une entité de traitement multimédia (350) pour effecteur un rapport comprend le contrôle de l'au moins une entité de traitement multimédia (350) pour rapporter l'au moins un parmi l'état de diviseur de la tâche de diviseur, l'état de transcodeur de l'au moins une des tâches de transcodeur et l'état de combineur de la tâche de combineur tandis qu'une tâche correspondante parmi la tâche de diviseur, les tâches de transcodeur et la tâche de combineur est réalisée.

8. Procédé selon la revendication 6, dans lequel le serveur de rapport est configuré pour provoquer la visualisation de l'au moins un parmi l'état de diviseur de la tâche de diviseur, l'état de transcodeur de l'au moins une des tâches de transcodeur et l'état de combineur de la tâche de combineur dans un tableau de bord Web (742).

9. Système comprenant :
au moins une mémoire (230) configurée pour stocker un code de programme informatique (800) ; et
au moins un processeur (220) configuré pour accéder au code de programme informatique (800) et fonctionner selon les instructions du code de programme informatique (800), le code de programme informatique (800) étant configuré pour amener l'au moins un processeur (220) à réaliser le procédé selon l'une des revendications 1 à 8.

10. Support lisible par ordinateur stockant un code informatique (800) qui est configuré pour, lorsqu'il est exécuté par au moins un processeur (220), amener l'au moins un processeur (220) à mettre en œuvre le procédé selon l'une des revendications 1 à 8.
